# EUROPEAN PATENT APPLICATION

(11) **EP 1 544 742 A1**
(43) Date of publication of application: **22.06.2005**
(21) Application number: 03293201.4
(22) Date of filing: 17.12.2003
(51) Int. Cl.: G06F 12/08, G06F 13/42, G06F 13/16

(54) **Method for reducing the processing time of a data processing device**

(71) Applicant: ALCATEL, 75008 Paris (FR)
(72) Inventor: Vogel, Luk, 2000 Antwerpen (BE)
(74) Representative: Plas, Axel

(57) **Abstract**

Method for operating a data processing device (D) which comprises a processing device (20), a slow accessible memory (10), a fast accessible memory (30) and a data copying device (40) is characterised by the fact that during the time that data from a next sector (j+1) of said sector-based storage device (10) are copied to said fast accessible memory (30), data from a previous sector (j) of said sector-based storage device (10) and previously temporarily stored in said fast accessible memory (30) are concurrently processed by said processing device (20).

## Description

The present invention relates to a method for reducing the processing time of a data processing device as is further described in the preamble of claim 1.

Such a method is already disclosed in the art, e.g. in the published *"US patent application US2003*/*0126364* " Therein, in paragraph [003] reference is made to a prior art method where data saved in a non-temporary memory sector such as a ROM, is first copied into a fast accessible RAM, and then to overlay this sector over the address sector originally occupied by the ROM. The same patent application further discloses a method improving this processing time, by making use of two separate cache memories.

A drawback of this prior art method is that the first method referred to is still too slow, whereas the second method consumes too much memory space by the need for two separate cache memories. Furthermore such an architecture is currently commercially not available such that it can only be of use for those companies who are active in the development of the processor itself. For companies who buy commercially available hardware such as processors and memories, this prior art solution is thus not feasible.

Other prior art methods, which do not use two cache memories, try to either shorten the processing time, or to shorten the copying time by using faster data transfer and/or data processing algorithms.

An object of the present invention is to provide a method for reducing the processing time , which is fast , does not need separate cache memories and can be applied on commercially available devices.

According to the invention, this object is achieved as explained in the characterising portion of claim 1.

In this way, during the time data from a next sector is copied from the slow sector-based data storage device such as for instance a flash memory card, to a fast accessible memory such as for instance a RAM, data that is already residing in this fast accessible memory and originally belonging to a previous sector of the sector-based data storage device, is concurrently processed by the processing device. This solution can be realised by means of modules of a driver software module, and is thus, as such, applicable to commercially available devices which can be accessed and controlled by such a program module.

A further characteristic feature of the present invention is shown in claim 2.

This internal re-location within the fast accessible memory can be needed in case the data are not immediately stored within a portion of the fast accessible memory where also the code of the processing application is stored. Directly storing the data in this region of the fast memory is not always possible such that in most embodiments such an extra relocation step is needed. As will be explained in a further paragraph of this document, the time needed for this extra relocation step is minor.

An additional characteristic feature of the present invention is mentioned in claim 3.

This further ensures a reduced processing time, not only during read operations from the sector-based data storage device, but also during write operations.

A further characteristic feature of the present invention is mentioned in claim 4.

This ensures a workable start-up of this method according to the invention, as will be further explained and illustrated in the descriptive part of this document by means of an embodiment of a driver software module.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein
Figure 1 gives a schematic of a data processing device in which the invention is applicable,
Figure 2 compares the prior art method with the invention,
Figure 3 presents a flowchart of a program module including some basic modules implementing the present invention.

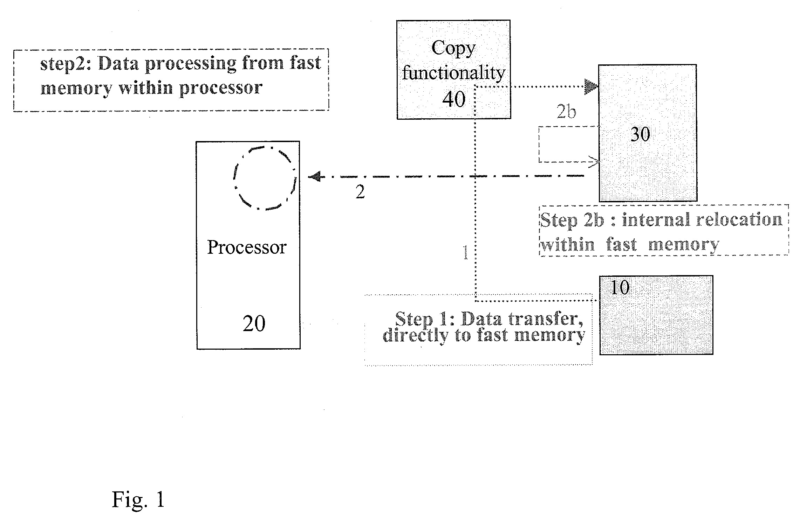

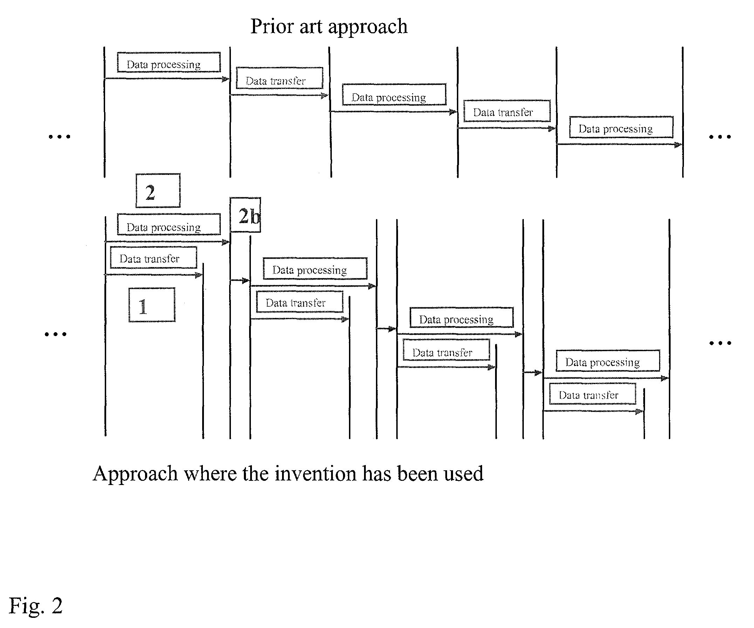

The present invention relates to high-speed access and processing of data, especially to and from sector-based data storage devices without special Hardware buffering for fetching multiple sectors such as flash memory cards, and some disk drives. The architecture of a data processing device wherein the present invention is applicable is shown in Figs. 1 and 2 and comprises a processing device denoted 20, a sector based storage device denoted 10, a fast accessible memory denoted 30 and a data copying device denoted 40. It is to be remarked that the data copying device may as well be incorporated within the processing device 20. In the drawings it is depicted as a separate entity in order to facilitate the understanding of the method.

The invention deals with the way the data from the sector-based data storage device 10 is accessed and processed by the processing device 20. In prior conventional art solutions , massive data blocks are first copied by means of the data copying device 40, for instance a DirectMemoryAccess, abbreviated by DMA, copy functionality, to the fast accessible memory, after which step these are processed by the processing device 20. Only after this processing and consecutive re-storage of the processed data into the original sectors of the slow storage device , the next block is fetched from the slow sector-based storage device for temporary storage into the fast accessible memory and consecutive processing. In order to speed up this process, faster data-storage devices can be used, but these are in general much more expensive. Similarly, the DMA functionality may as well be improved resulting in a small copy time. Yet all these solutions do not result in the desired speed, while at the same time keeping the architecture simple and cheap.

The method of the invention however preserves the same simple architecture, while yet achieving a considerable improvement in speed. It is based on a parallel data transfer and processing of blocks, as is depicted in Fig. 2. This means that while data is copied from a particular sector from the sector-based storage device , for instance sector j+1, to the fast accessible memory, data of a previous sector, for instance sector j, that is already stored within the fast accessible memory, is processed in parallel by the processing device 20. Similarly, while these processing of data of sector j is taking place, the already processed data of a sector j-1 is copied back from the fast accessible memory to the slow sector-based data storage.

In an optimum solution, the data is directly copied from the sector-based data storage device, to a location within the fast accessible memory where the code of the processing application is also stored. This obviates an additional relocation of these copied data within the fast accessible memory to these specific locations. Since such a direct transfer is not always possible such that in some embodiments this additional step of relocation of the data is necessary. Such a relocation is indicated in Figs. 1 and 2 by means of step 2b "internal relocation within fast memory", whereas the data transfer from sector-based memory to fast accessible memory is indicated by means of step 1. The data processing of the data obtained from the fast memory by the processor is indicated by means of step 2, depicting on one hand the transfer of the data to the processor, and the processing within the processor itself.

The improvement in timing can be deduced from Fig. 2 which compares the traditional approach wherein first the data blocks are to be transferred before the processing on them can start, with the approach of the invention, wherein data transfer and processing take place concurrently. In practice time savings up to 30 % can be obtained with the following hardware/software platforms : Powerpc IBM 750FX @733MHz for the processor 20, Compact flash Card SANDISK for the sector based memory 10 , 64 bit wide SDRAM interface running @133 MHz for the fast memory 30, use DMA for the copy functionality 40 and an Application: SPEC processing SW running on the processor 20.

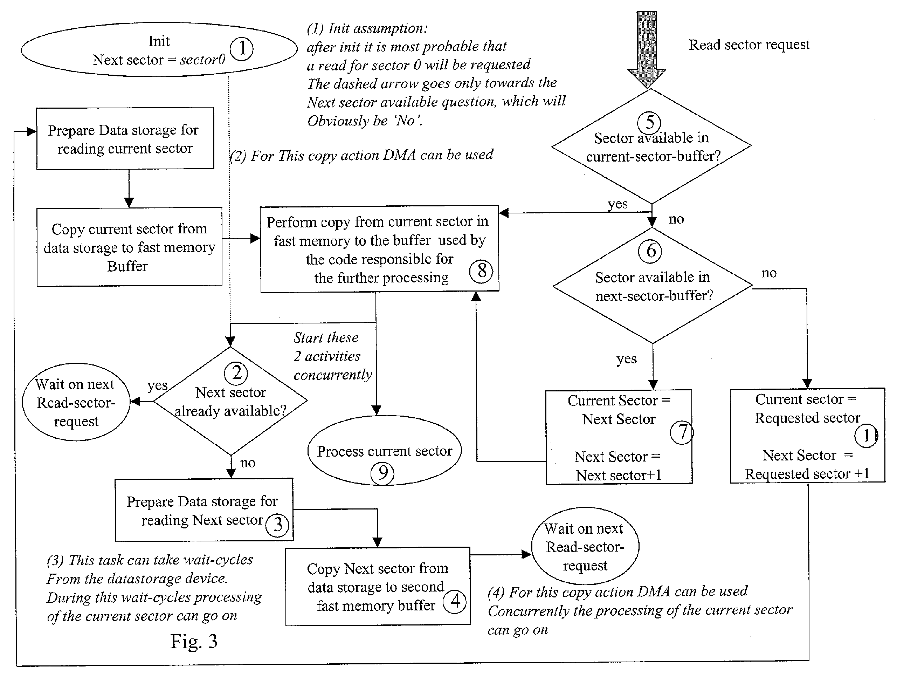

The method may be implemented by means of instructions contained in an application program driver module, as depicted in Figure 3. This application program driver starts with an initialisation of the pointer to the sector in the sector-based memory 10 from where to access the data to be processed by the application. At start-up this pointer will be initialised to zero. Then the next step of the driver program will be the check whether the data of the next sector of the sector-based memory is already available in the fast memory 30 as depicted by means of the diamond-shaped block 2. At start-up, this will not be the case since the data has not yet been copied from the sector-based memory 10 to the fast memory 30. The next step consists of preparing the slow sector-based Data storage 10 for reading this next sector and to copy this to the fast memory 30 , although within a spare buffer therein, which is not the one used by the higher level application program. In the figure 3 this is indicated by block 4, which refers to the second fast memory buffer to be distinghuised from the current buffer used and accessible by the program responsible for the processing of the data.

From that moment on the data of one sector, in general the first sector needed by the application, is residing in this second or spare buffer -called next buffer, whereas the buffer accessible by the higher level application program within the fast memory, is still empty. Therefore processing does still not take place, and is postponed until a next sector is requested by the application program. This is indicated by the thick dark arrow indicating a kind of interrupt signal from the higher level application to the application driver and giving a request from the higher order application program to the driver program for having that sector available. At that moment , the driver program will first perform a check, indicated by the diamond-shaped module 5, whether data residing in the currently pointed-to buffer in the fast memory contains the requested data. Since this was not the case, because the data was residing within the second (next) buffer, and not the one currently pointed to, a next check will be made, by means of diamond-shaped module 6 whether this data is then residing within this second buffer. As this is now the case, pointers to the sector-based memory will be updated by means of block 7. Next the internal relocation step within the fast memory will take place by block 8 such that the data is copied to the current buffer within the fast memory, which is thus the one actually accessed to and used by the higher level application program code. Next , concurrently the processing of the data in that current buffer and the fetching of the data of the next sector from the sector-based memory, will take place as indicated by the two arrows leaving block 8. One of these arrows points to the already described set of instructions 2,3 and 4, which form the copying of the data of the sector-based memory into the fast memory; the other arrow points to the elliptical shaped module 9, representing the processing of the data of the current sector.

If the requested sector is not available in the current or the next sector, as indicated by the "No" branch of module 6, this means that the pro-active fetching of the next sector was completed, but that the software wanted to access a complete other sector in the sector based device. In this case the current sector will be loaded with the data of the requested sector. And the next sector will be initialized to fetch the data already of the sector that follows the requested sector, as indicated by block 11. The program will then again jump to the initial data copy blocks previously discussed, after which step the requested sector is fetched by module 8 and passed towards the application. Concurrently with the processing of the data, the next sector will already be copied to fast memory. As indicated via modules 2,3 and 4.

It is to be remarked that the example give in Fig. 3 works with subsequent sectors, i.e. a current sector and the next one. In case the fast memory has more buffering capabilities, processing of a previous (i.e. with a distance larger than 1 sector between the next one), while fetching a next one , is also possible.

It is also to be remarked that in case the application is adapted to work with different buffers, and the here-described data-fetching strategy is incorporated in the application itself then the data can immediately be copied to the data-section that will be used by the application. This is easily possible when there is only one application using the sector based data-storage, but in case of multiple applications sharing the same data-storage device this will become much more complex to manage. In that case just the pro-active fetching of the next sector to fast accessible memory can already gain a lot of time, without introducing supplementary complexity.

While the principles of the invention have been described above in connection with specific apparatus, it is to be clearly understood that this description is made only by way of example and not as a limitation on the scope of the invention, as defined in the appended claims.

## Claims

1. Method for operating a data processing device (D) which comprises a processing device (20), a slow accessible memory (10), a fast accessible memory (30) and a data copying device (40) ,
**characterised in that**
during the time that data from a next sector (j+1) of said sector-based storage device (10) are copied to said fast accessible memory (30),
data from a previous sector (j) of said sector-based storage device (10) and previously temporarily stored in said fast accessible memory (30) are concurrently processed by said processing device (20).

2. Method according to claim 1, wherein said data from a previous sector (j) is internally relocated within said fast accessible memory (30) before being processed by said processing device (20).

3. Method according to claim 1 wherein
after the data from said previous sector (j) are processed and temporarily re-stored within said fast accessible memory (30), said processed data are copied back from said fast accessible memory (30) to said sector-based storage device (10), during the time that
data from said next sector (j+1) temporarily stored in said fast accessible memory (30) are processed by said processing device (20) .

4. Method according to any of the previous claims, wherein said method includes an initialisation step of transferring data from first and second intitialised sectors of said sector-based storage device (10) to said fast accessible memory (30).
